Europäisches Patentamt

European Patent Office

Office européen des brevets

(11) Veröffentlichungsnummer: **0 307 577**
**A2**

(12) **EUROPÄISCHE PATENTANMELDUNG**

(21) Anmeldenummer: 88111283.3

(51) Int. Cl.⁴: **H04Q 11/04**

(22) Anmeldetag: **14.07.88**

(30) Priorität: **17.09.87 DE 3731155**

(43) Veröffentlichungstag der Anmeldung:
**22.03.89 Patentblatt 89/12**

(84) Benannte Vertragsstaaten:
**AT BE CH ES FR GB IT LI LU NL**

(71) Anmelder: **TELENORMA Telefonbau und Normalzeit GmbH**
**Mainzer Landstrasse 128-146**
**D-6000 Frankfurt am Main(DE)**

(72) Erfinder: **Eli, Bernhard, Dipl.-Ing.**
**Lenbachstrasse 96**
**D-6090 Rüsselsheim(DE)**
Erfinder: **Reiss, Roland, Dipl.-Ing.**
**Stettiner Strasse 24b**
**D-6203 Hochheim(DE)**

(54) **Verfahren zum Steuern des Verbindungsaufbaus und -abbaus in einer digital nach dem PCM-Prinzip durchschaltenden Fernmelde-, insbesondere Fernsprechvermittlungsanlage.**

(57) · 1. Verfahren zum Steuern des Verbindungsauf und -abbaus in einer digital nach dem PCM-Prinzip durchschaltenden Fernmelde-, insbesondere Fernsprechvermittlungsanlage.

2.1. Mit dem Verfahren soll erreicht werden, daß Steuerungs- und Programmstrukturen, die für das Steuern von mehrstufigen Koppelnetzwerken bei digitalen Fernmelde-, insbesondere Fernsprechvermittlungsanlagen angewendet werden, auch dann in gleicher Weise anwendbar sind, wenn nur ein einziger Zeit/Raumkoppler vorhanden ist, also eine einstufige Anordnung vorliegt. Es soll also vermieden werden, daß besondere Steuerprozeduren und Programmstrukturen speziell für den Einsatz bei einstufigen Vermittlungsanlagen entwickelt werden müssen.

2.2. In der zur Steuerung eines Zeit/Raum-Kopplers vorgesehenen Steuereinrichtung sind zusätzliche Speicher vorgesehen, worin die beim Verbindungsaufbau benutzen Zeitlagenzuordnungen und Verbindungsbeziehungen so abgelegt werden, wie sie bei mehreren Zeit/Raum-Kopplern und einer übergeordneten Koppelstufe bestehen würden. Aus diesen gespeicheren Daten werden die Einstellinformationen für die im einzigen Koppelnetzwerk der einstufigen Vermittlungsanlage befindlichen Durchschaltespeicher gewonnen, und der Verbindungsabbau wird damit gesteuert.

2.3. Das Verfahren wird angewendet bei digital durchschaltenden Fernmelde-, insbesondere Fernsprechvermittlungsanlagen kleiner und mittlerer Größenordnungen.

Fig. 1

**Verfahren zum Steuern des Verbindungsaufbaus und -abbaus in einer digital nach dem PCM-Prinzip durchschaltenden Fernmelde-, insbesondere Fernsprechvermittlungsanlage**

Die Erfindung betrifft ein Verfahren zum Steuern des Verbindungsaufbaus und -abbaus in einer digital nach dem PCM-Prinzip durchschaltenden Fernmelde-, insbesondere Fernsprechvermittlungsanlage nach dem Oberbegriff des Patentanspruchs 1.

Aus der DE-OS 31 04 002 ist eine Schaltungsanordnung für Fernmeldevermittlungsanlagen, insbesondere PCM-Fernsprechvermittlungsanlagen mit einer Zeitmultiplexkoppelanordnung mit Zeitlagenvielfachen bekannt. In der Zeichnung ist ein Prinzipschaltbild dargestellt, woraus hervorgeht, daß die Eingangs- und Ausgangskoppelstufen Z1 und Z2 aus zeitmultiplex durchschaltenden Kopplern bestehen, die über eine räumlich durchschaltende Koppelstufe R miteinander verbunden werden. Dieses Prinzip der Zeit-Raum-Zeitdurchschaltung ist bekannt und wird immer dann bei nach dem PCM-Prinzip durchschaltenden Fernsprechvermittlungsanlagen angewendet, wenn wegen der Ausbaugröße einer Vermittlungsanlage die Kapazität einer einzigen nach dem Zeitpultiplexprinzip durchschaltenden Koppelstufe nicht ausreicht. Die Steuerprozeduren für derartige Fernsprechvermittlungsanlagen, die meist als Programme in Speichern einer zentralen Steuereinrichtung abgelegt sind, bewirken, daß Zeitlagen und räumliche Verbindungswege einer Verbindung so zugeteilt werden, daß die gewünschte Verbindung zustande kommt. Für kleinere und mittlere Fernsprechvermittlungsanlagen, bei denen das Verkehrsaufkommen in einer Größenordnung liegt, daß es von einer einzigen zeitmultiplex durchschaltenden Koppelanordnung bewältigt werden kann, sind aufgrund der anderen Konfiguration spezielle darauf abgestimmte Steuerprozeduren erforderlich. Die zur Steuerung eines einstufig aufgebauten Koppelnetzwerkes notwendigen Steuerprozeduren müssen also speziell entwickelt und an die jeweilige Koppelstruktur angepaßt werden, wozu ein erheblicher zumindest zeitlicher Aufwand erforderlich ist.

Die Aufgabe der Erfindung besteht darin, ein Verfahren zum Steuern des Verbindungsaufbaus und -abbaus anzugeben, wobei die für ein mehrstufiges, nach dem PCM-Prinzip zeitmultiplex durchschaltenden Fernsprechvermittlungssystem vorgesehenen Steuerprozeduren unverändert auch für eine Fernsprechvermittlungsanlage angewendet werden können, welches ein einstufiges Koppelnetzwerk aufweist. Bei einem derartigen Koppelnetzwerk werden in bekannter Weise die digitalisierten Amplitudenproben einer Fernsprechverbindung der jeweiligen Sendezeitlage entsprechend abgelegt und zu einem Zeitpunkt ausgelesen, der einer Empfangszeitlage entspricht.

Die Lösung dieser Aufgabe erfolgt durch eine Merkmalskombination, wie sie im Patentanspruch 1 angegeben ist.

Damit wird in vorteilhafter Weise erreicht, daß unabhängig davon, ob eine nach dem PCM-Prinzip durchschaltende Fernsprechvermittlungsanlage mit einem einstufigen oder mit einem mehrstufigen Koppelnetzwerk ausgestattet ist, immer die gleichen Steuerprozeduren und damit die gleichen Programmstrukturen anwendbar sind. Mit den in den Unteransprüchen angegebenen Weiterbildungen der Erfindung wird angegeben, auf welche Weise die einzelnen Verbindungszustände bearbeitet werden.

Ein Ausführungsbeispiel der Erfindung wird nachfolgend anhand von Zeichnungen näher erläutert.

Es zeigt:

Fig. 1 das Blockschaltbild einer Fernsprechvermittlungsanlage mit einem einstufig durchschaltenden Zeit/Raum-Koppler.

Fig. 2 das Blockschaltbild einer großen Fernsprechvermittlungsanlage mit einer übergeordneten Raum/Koppelstufe.

Fig. 3 das Schema der zusätzlichen Speicher.

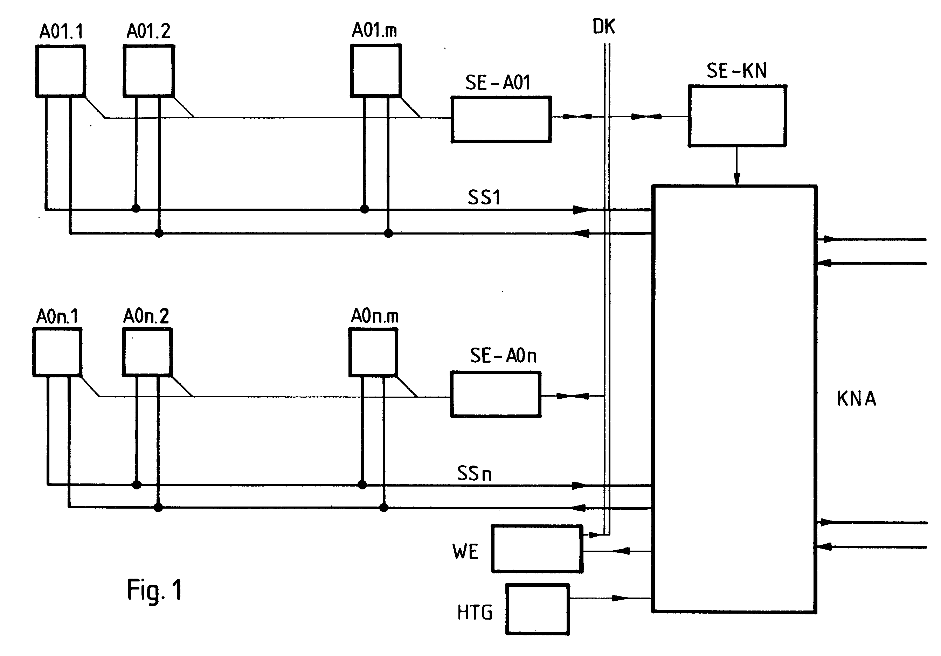

In der Fig. 1 ist dargestellt, wie mehrere Sammelschienenpaare SS1 bis SSn mit einem Zeit/Raum-Koppler KNA verbunden sind. An jedes Sammelschienenpaar sind Gruppen von Anschlußorganen A01.1 bis A01.m bzw. A0n.1 bis A0n.m angeschlossen. Jeder Gruppe von Anschlußorganen A0 ist eine Steuereinrichtung SE-A01 bis SE-A0n zugeordnet. Über diese Steuereinrichtungen SE-A0 findet der Signalaustausch zwischen den Anschlußorganen und der für die Einstellung des Zeit/Raum-Kopplers KNA zuständigen Steuereinrichtung SE-KN statt. Hierzu ist ein Datenkanal DK vorgesehen, woran alle Steuereinrichtungen SE parallel angeschlossen sind. An den Zeit/Raum-Koppler KNA sind außerdem Wahlempfänger WE und ein Hörtongenerator HTG angeschlossen. Die Wahlempfänger WE geben die über den Sprachkanal empfangenen Informationen, vorwiegend gewählte Rufnummern, nach einer in ihnen erfolgenden Auswertung als Signalisierungsinformation über den Datenkanal DK zu den entsprechenden Steuereinrichtungen SE weiter. In der Fig. 1 ist außerdem gestrichelt dargestellt, daß Sammelschienenausgänge und -eingänge vorgesehen sein können, um Verbindungen zwischen mehreren Zeit/Raum-Kopplern KNA mit Hilfe einer übergeordneten Raumkoppelstufe herstellen zu können.

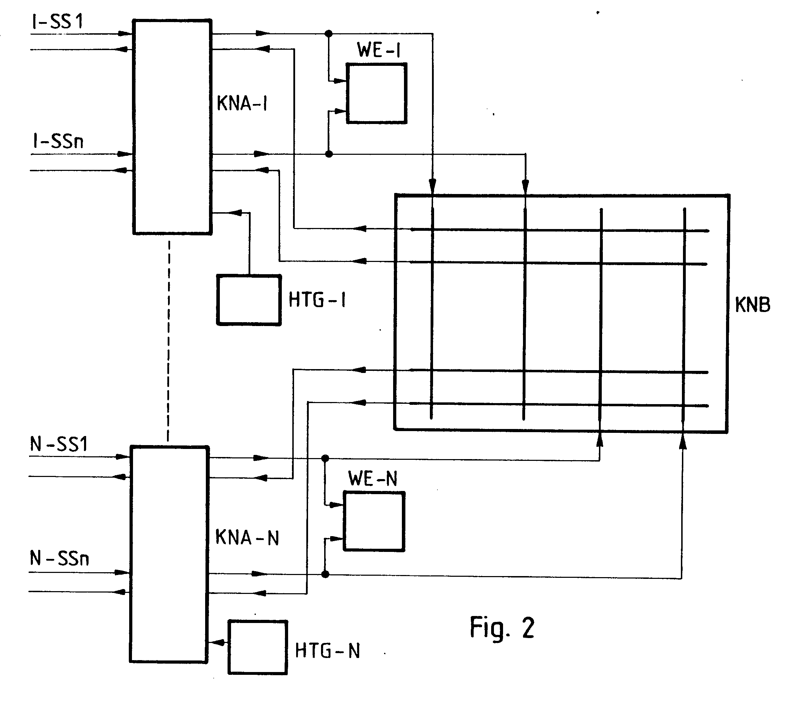

Eine zweistufige Koppelanordnung, bei der mehrere Zeit/Raum-Koppler KNA-I bis KNA-N über eine zweite Raumkoppelstufe KNB miteinander verbunden werden können, ist in Fig. 2 dargestellt. Die zu den Anschlußorgangruppen führenden Sammelschienen I-SS1 bis I-SSn, bzw. N-SS1 bis N-SSn entsprechend jeweils den in Fig. 1 dargestellten Sammenschienenpaaren SS1 bis SSn. An jeden Zeit/Raum-Koppler KNA ist jeweils ein eigener Hörtongenerator HTG-I bis HTG-N angeschlossen. Ebenso verhält es sich mit den Wahlempfängern WE-I bis WE-N, die jeweils an die zur übergeordneten Raum-Koppelstufe KNB führenden Sendesammelschienen angeschlossen sind. Die in der Zeichnung nur einfach dargestellten Wahlempfänger WE-I bis WE-N repräsentieren jeweils eine ganze Gruppe von Wahlempfängern, deren Anzahl nach den verkehrstheoretischen Gegebenheiten bemessen wird. Die Steuerprozeduren, die für ein Koppelnetzwerk, wie es in Fig. 2 dargestellt ist, erforderlich sind, sollen erfindungsgemäß in gleicher Weise angewendet werden, bei nur einem einzigen Zeit/Raum-Koppler KNA, wie dies in Fig. 1 dargestellt ist.

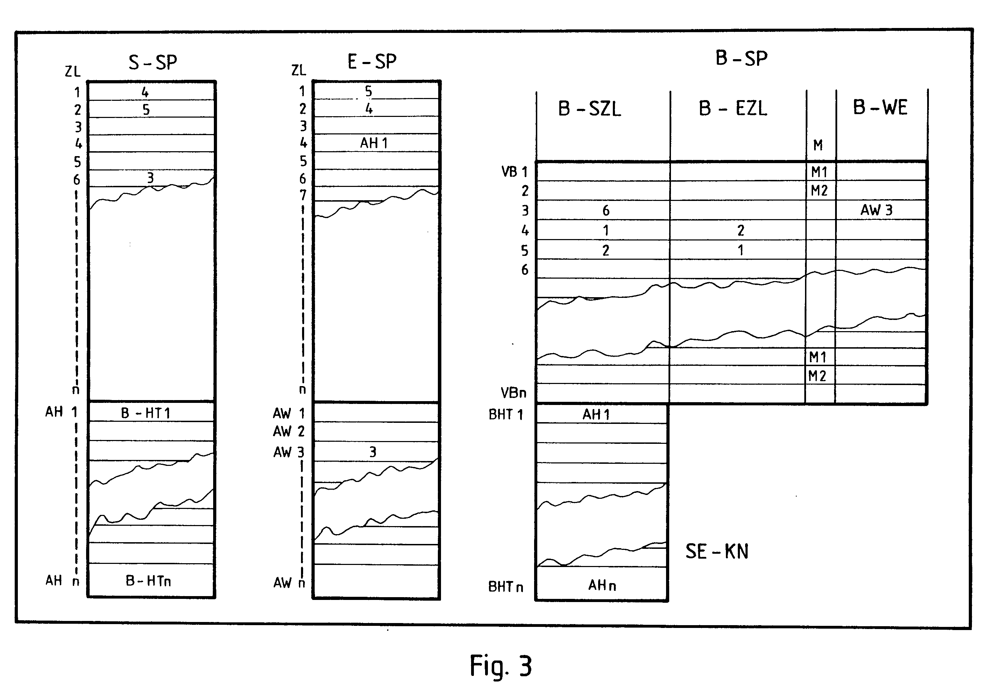

Zu diesem Zweck sind in der für die Einstellung der Zeitvielfach-Sprechwege zuständigen Steuereinrichtung SE-KN zusätzliche Speicher vorgesehen, deren Schema in Fig. 3 dargestellt ist. Zur Speicherung der den Verbindungen zugeordneten Zeitlagen sind zwei gleichartig aufgebaute Speicher S-SP und E-SP vorgesehen, die jeweils so viele Speicherzeilen enthalten, wie Zeitlagen ZL1 bis ZLn den Anschlußorganen AO zugeordnet zur Verfügung stehen. Dabei sind im Sendespeicher S-SP die Verbindungsbeziehungen der Sendezeitlagen und im Empfangsspeicher E-SP die Verbindungsbeziehungen der Empfangszeitlagen gespeichert. Der Sendespeicher hat darüber hinaus noch einen zusätzlichen Bereich AH1 bis AHn worin Zeitlagenbeziehungen für das Senden von Hörtönen fest eingespeichert sind. Auch im Empfangsspeicher E-SP ist ein zusätzlicher Bereich AW1 bis AWn vorgesehen, worin die Zeitlagenbeziehungen für das Anschalten von Wahlempfängern WE gespeichert sind. Die im Sendespeicher S-SP und im Empfangsspeicher E-SP eingespeicherten Zeitlagenbeziehungen beschreiben Verbindungen, wie sie bei einem zweistufig aufgebauten Koppelnetz bestehen würden. Auf diese Weise ist es möglich, eine gesamte Verbindung beim Verbindungsaufbau so zu beschreiben, daß das Auslösen der Verbindung ordnungsgemäß erfolgen kann. Über die in den genannten Speichern S-SP und E-SP eingespeicherten Informationen werden außerdem die beim Auslesen des PCM-Haltespeichers bereitzustellenden Adressen gebildet. Es wird dabei davon ausgegangen, daß zur dem jeweiligen Anschlußor-gan AO zugeordneten Sendezeitlage der gerade anstehende digitalisierte Abtastwert eingespeichert wird, und daß dieser Wert zur Empfangszeitlage des Gesprächspartners ausgelesen wird.

Zur Nachbildung der Verbindungsbeziehungen, wie sie in der Raumkoppelstufe KNB eines zweistufig aufgebauten Koppelnetzes bestehen würden, ist ein weiterer Speicher BSP vorgesehen. In diesem Speicher B-SP sind so viele Zeilen VB1 bis VBn vorgesehen, wie entsprechend der gesamten Zeitlagenkonfiguration Verbindungen bestehen können. Jede Zeile ist in verschiedene Bereiche unterteilt. Der erste Bereich B-SZL ist den Zeitlagen des Sendespeichers S-SP zugeordnet und enthält die Bezeichnungen der Sendezeitlagen. Ein zweiter Bereich B-EZL ist dem Empfangsspeicher E-SP zugeordnet und enthält die Bezeichnungen der Empfangszeitlagen. Für das Anschalten von Wahlempfängern ist ein weiterer Bereich B-WE vorgesehen, worin die Adressen von Wahlempfängern eingespeichert werden. Wenn in einer Vermittlungsanlage Mehrfachverbindungen, z.B. für Ansagen oder für Rundspruch vorkommen, wobei die von einem einzigen Sender ausgehenden Signale zu mehreren, das gleiche Signal empfangenden Anschlußorganen AO gelangen, vorkommen, so ist dafür ein besonderer Bereich M vorgesehen. Dort wird eine Information bei jeder einzelnen Zeitlage eingetragen, die an einer Mehrfachverbindung beteiligt ist. Damit ist es möglich, beim Auslösen solcher Mehrfachverbindungen alle daran beteilig-ten Anschlußorgane AO und Zeitlagen zu erfassen.

Für das Ankoppeln von Hörtönen enthält der Sendezeitlagenbereich B-SZL zusätzliche Speicherzeilen BHT1 bis BHTn worin die fest vorgege-benen Zeitlagenbeziehungen mit dem Sendespei-cher S-SP eingetragen sind, die für das Senden von Hörtönen vorgesehen sind.

Anhand einiger Verbindungsbeispiele soll nun erläutert werden, auf welche Weise die Verbindungsbeziehungen in den zusätzlichen Speichern S-SP, E-SP und B-SP dargestellt werden. Es sei zunächst angenommen, daß zwischen den An-schlußorganen AO1.1 und AO1.2 eine Gesprächs-verbindung besteht. Dafür sind im Sendespeicher S-SP und im Empfangsspeicher E-SP die beiden Zeitlagen ZL1 und 2 belegt. Da die Steuereinrichtung SE-KN so ausgelegt ist, daß Verbindungen immer so behandelt werden, als würden sie über eine Raumkoppelstufe KNB durchgeschaltet, werden dieser Verbindung Verbindungszeitlagen, im Beispiel 4 und 5 zugeteilt. Die Zuteilung dieser Verbindungszeitlagen erfolgt entsprechend den gerade zum Zeitpunkt des Verbindungsaufbaus freien Zeitlagen, d.h. entsprechend der im weiteren Speicher B-SP vorhandenen freien Zeilen. Bei der im Beispiel angesprochenen Verbindung wird also die dem Anschlußorgan A01.1 zugeordnete Sendezeitlage ZL1 zur Verbindungszeitlage 4 durchgeschaltet, weshalb in der ersten Zeile des Sendespeichers S-SP die 4 eingetragen ist und in der vierten Zeile des weiteren Speichers B-SP die Ziffer 1 für die erste Zeitlage ZL1 im Sendezeitlagenbereich B-SZL vermerkt ist. Da zur gleichen Verbindungszeitlage 4 der Gesprächspartner diese Information empfangen muß, ist in der gleichen Zeile im Empfangszeitlagenspeicherbereich B-EZL die dem anderen Anschlußorgan AL1.2 zugeteilte Zeitlage 2 eingetragen. In der zweiten Zeile des Empfangsspeichers E-SP ist aus dem gleichen Grund die Verbindungszeitlage 4 vermerkt. Die hier beschriebene Verbindungsbeziehung der einen Verbindungsrichtung ist nach dem gleichen Prinzip auch für die andere Verbindungsrichtung eingetragen. Diese Gegenrichtung der Verbindung wird, wie aus Fig. 3 hervorgeht, über die imaginäre Verbindungszeitlage 5 durchgeschaltet, weshalb in der dem Gesprächspartner A01.2 zugeteilten Zeitlage 2, bzw. in der zugehörigen Zeile des Sendespeichers S-SP die Ziffer 5 eingetragen ist. Demzufolge befindet sich diese Ziffer 5 auch in der Zeile ZL1 des Emfpangsspeichers E-SP, die dem ersten Anschlußorgan A01.1 entsprechend der zugehörigen Zeitlage zugeteilt ist. In der entsprechenden Speicherzeile VB5 ist demzufolge eingetragen, daß auf der zweiten Zeitlage gesendet und auf der ersten Zeitlage empfangen wird.

Weiterhin sei angenommen, daß ein Anschlußorgan, im Beispiel das nicht dargestellte Anschlußorgan A01.4, an dem ein Fernsprechendgerät angeschlossen ist, gerade erst belegt wurde, weshalb der Wählton dorthin zu senden ist. Die Empfangszeitlage ZL4 ist demzufolge im Empfangsspeicher E-SP mit einer Information AH1 belegt, die den Empfang des Wähltons kennzeichnet. In dem besonderen Bereich AH1 bis AHn des Sendespeichers S-SP sind Verbindungsbeziehungen fest eingetragen, womit imaginäre Zeitlagen im Sendezeitlagenbereich B-SZL des weiteren Speichers B-SP gekennzeichnet werden. Umgekehrt sind in dessen Speicherzeilen BHT1 bis BHTn Informationen eingetragen, die im Sendespeicher S-SP die Zeitlagen kennzeichnen, worauf die entsprechenden Hörtöne gesendet werden. Der Hörtongenerator HTG sendet also auf einer für den Wählton zugeteilten Zeitlage AH1 den Wählton, der im vorgenannten Beispiel zur Zeitlage ZL4 von einem Anschlußorgan A01.4 empfangen wird. Für diese Verbindungsbeziehung muß auch der weitere Speicher B-SP herangezogen werden, weil die Steuereinrichtung SE-KN für das Schalten von Verbindung über ein zweistufiges Koppelnetz ausgelegt ist.

Weiterhin sei angenommen, daß von einem ebenfalls nicht dargestellten Anschlußorgan A01.6, also zu einer diesem zugeteilten Zeitlage ZL6 ein Verbindung aufgebaut werden soll, weshalb ein Wahlempfänger WE zu dieser Zeitlage angeschaltet ist. Im Sendespeicher S-SP ist also zur Zeitlage 6 die Ziffer 3 eingetragen, weil diese Verbindungszeitlage frei war und für diese Verbindung zur Verfügung gestellt wurde. Demzufolge ist im Sendezeitlagenbereich B-SZL zur Kennzeichnung der Sendezeitlage des Anschlußorgans die Ziffer 6 eingetragen. In der gleichen Zeile ist eine Adresse AW3 vermerkt, womit gekennzeichnet wird, daß an dieser Verbindung der dritte Wahlempfänger WE angeschaltet ist. Diese Verbindungszeitlage 3 ist wiederum in einer Zeile des Empfangsspeichers E-SP vermerkt, die sich in einem besonderen, den Wahlempfängern zugeteilten Speicherbereich AW1 bis AWn befindet. Auch hierbei handelt es sich ebenso wie bei dem zuvor geschilderten Empfang des Wähltons um eine einseitig gerichtete Verbindung.

Wenn Mehrfachverbindungen durchgeschaltet werden sollen, wobei von einem Sender aus über mehrere Empfangszeitlagen gleichartige Informationen abzugeben sind, so wird dies in einem besonderen Bereich M des weiteren Speichers B-SP vermerkt. Die zu einer Verbindung gehörenden Zeitlagen sind dann jeweils mit dem gleichen Kennzeichen M1 oder M2 versehen. Diese Kennzeichung befähigt die Steuereinrichtung SE-KN bei Auslösevorgängen eine eindeutige Zuordnung festzustellen, damit derartige Verbindungen zum Teil oder auch ganz ausgelöst werden können, ohne daß Schwierigkeiten entstehen.

Mit den in den genannten Speichern S-SP, E-SP und B-SP vorgenommenen Eintragungen werden die Ansteueradressen gebildet, die für das Auslesen der Sprachprobenworte zum richtigen Zeitpunkt und auch zum Anschalten an das entsprechende Sammelschienenpaar SS1 bis SSn notwendig sind. Außerdem dienen diese Eintragungen dazu, daß aufgebaute Verbindungen ordnungsgemäß wieder ausgelöst werden können, wobei die zuvor belegten Zeitlagen ZL zusammen mit den zugehörigen Speicherzeilen freigeschaltet werden. Dabei werden die räumlichen Koppelbeziehungen, die bei einem zweistufigen Koppelnetzwerk vorhanden wären im weiteren Speicher B-SP lediglich für Steuerungszwecke nachgebildet, obwohl sie bei einem nur aus einem einzigen Zeit/Raum-Koppler KNA bestehenden Koppelfeld in Wirklichkeit gar nicht vorhanden sind.

## Ansprüche

1. Verfahren zum Steuern des Verbindungsaufbaus und -abbaus in einer digital nach dem PCM-Prinzip durchschaltenden Fernmelde-, insbesondere Fernsprechvermittlungsanlage, wobei je nach Größe der Vermittlungsanlage entweder einstufig in einem Zeit/Raum-Koppler (KNA) durchgeschaltet wird oder mehrere Zeit/Raum-Koppler (KNA-I bis KNA-N) über eine räumlich durchschaltende zweite Koppelstufe (KNB) miteinander verbunden werden, wobei im Zeit/Raum-Koppler (KNA) die den Anschlußorganen fest zugeordneten Zeitlagen wahlfrei der Verbindung entsprechend auf andere Zeitlagen umgesetzt werden, dadurch gekennzeichnet,

daß bei Vermittlungsanlagen mit nur einem einzigen Zeit/Raum-Koppler (KNA), also ohne zweite Koppelstufe (KNB), die Steuerprozeduren für mehr als einen Zeit/Raum-Koppler (KNA) angewendet werden, wozu in der Steuereinrichtung (SE-KN) zusätzliche Speicher (S-SP, E-SP, B-SP) vorgesehen sind, worin die beim Verbindungsaufbau benutzten Zeitlagenzuordnungen und Verbindungsbeziehungen so abgelegt werden, wie sie bei mehreren Zeit/Raum-Kopplern (KNA) und einer übergeordneten Koppelstufe (KNB) bestehen würden,

daß aus diesen Daten die Einstellinformation für die im einzigen Zeit/Raum-Koppler (KNA) der einstufigen Vermittlungsanlage befindlichen Durchschaltespeicher gewonnen werden, und daß diese Daten für den Verbindungsaufbau und -abbau nötige Informationen liefern.

2. Verfahren nach Anspruch1,
dadurch gekennzeichnet,
daß in dem zur Nachbildung der Ausgänge des Zeit/Raum-Kopplers (KNA) vorgesehenen zusätzlichen Sendespeicher (S-SP) und in dem zugehörigen Empfangsspeicher (E-SP) jedem Anschlußorgan (A0) und damit jeder Zeitlage (ZL) eine Speicherzeile zugeordnet ist, worin die Nummer einer imaginären Zeitlage für eine nicht vorhandene übergeordnete Koppelstufe (KNB) abgelegt ist.

3. Verfahren nach Anspruch 1,
dadurch gekennzeichnet,
daß in dem zur Nachbildung der Zeitlagenzuordnung in einer nicht existenten übergeordneten Koppelstufe (KNB) vorgesehenen weiteren Speicher (B-SP) pro Zeitlage eine Speicherzeile vorgesehen ist, worin die Zeitlagen (ZL) der miteinander verbundenen Anschlußorgane (A0) abgelegt sind.

4. Verfahren nach Anspruch 3,
dadurch gekennzeichnet,
daß Mehrfach-Verbindungen (MV), d.h. wenn mehrere Anschlußorgane (A0) das gleiche Signal (z.B. Ansagen, Rundspruch) empfangen, in dem weiteren Speicher (B-SP) besonders gekennzeichnet sind.

5. Verfahren nach Anspruch 1,
dadurch gekennzeichnet,
daß im zusätzlichen Sendespeicher (S-SP) ein besonderer Bereich (AH1 bis AHn) für das Senden von Hörtönen vorgesehen ist, wobei den einzelnen Hörtönen jeweils eine Zeile fest zugeordnet ist, daß im Sendezeitlagenbereich (B-SZL) des weiteren Speichers (B-SP) ein besonderer Bereich (BHT1 bis BHTn) für das Eintragen von Hörtonzeitlagen vorgesehen ist, wobei jeder Hörtonart eine Zeile fest zugeordnet ist, und daß die Eintragungen in den genannten besonderen Bereichen (AH1 bis AHn, BHT1 bis BHTn) die Verbindungrbeziehung zu einem Hörtongenerator (HTG) beschreiben.

6. Verfahren nach Anspruch 1,
dadurch gekennzeichnet,
daß in dem zusätzlichen Empfangsspeicher (E-SP) ein besonderer Bereich (AW1 bis AWn) vorgesehen ist, wobei jeweils einem Wahlempfänger eine Zeile fest zugeordnet ist, daß im weiteren Speicher (BSP) ein besonderer Bereich (B-WE) vorgesehen ist, wodurch die dem Empfangszeitlagenbereich (B-EZL) zugeordneten Zeilen erweitert werden für die Aufnahme der einem Wahlempfänger fest zugeordneten Zeitlage (AW1 bis AWn), und daß durch die Inhalte der vorgenannten besonderen Speicherbereiche (AW1 bis AWn, B-WE) die Verbindungen zwischen Anschlußorganen (A0) und Wahlempfängern (WE) beschrieben werden.

Fig. 1

EP 0 307 577 A2

I-SS1

KNA-I

WE-I

I-SSn

HTG-I

KNB

N-SS1

KNA-N

WE-N

N-SSn

HTG-N

Fig. 2

TELEKGRMA, TN P 4114

Fig. 3